# EUROPÄISCHE PATENTSCHRIFT

(11) **EP 1 431 361 B1**
(45) Veröffentlichungstag und Bekanntmachung des Hinweises auf die Patenterteilung: **24.02.2010**
(21) Anmeldenummer: 03027028.4
(22) Anmeldetag: 24.11.2003
(51) Int. Cl.: C09J 125/14, C08K 5/12, C09J 7/02, C08L 27/06

(54) **Klebeband zum Schützen, Kennzeichnen, Isolieren und Ummanteln**
Adhesive tape for protecting, marking, isolating and coating
Bande adhésive pour protéger, marquer, isoler et envelopper

(30) Priorität: 18.12.2002 DE 10259618
(43) Veröffentlichungstag der Anmeldung: 23.06.2004
(73) Patentinhaber: TESA SE, 20253 Hamburg (DE)
(72) Erfinder: Wenninger, Dieter, 258371 Singapore (SG); Sentosa, Petrus, 738094 Singapore (SG); Cheong, Michael, 161120 Singapore (SG)

(56) Entgegenhaltungen:
- US-A- 5 716 701
- PATENT ABSTRACTS OF JAPAN vol. 017, no. 644 (C-1134), 30. November 1993 (1993-11-30) & JP 05 202342 A (SEKISUI CHEM CO LTD), 10. August 1993 (1993-08-10)
- PATENT ABSTRACTS OF JAPAN vol. 017, no. 361 (C-1080), 8. Juli 1993 (1993-07-08) & JP 05 051566 A (SEKISUI CHEM CO LTD), 2. März 1993 (1993-03-02)

## Beschreibung

Gegenstand der Erfindung ist ein Klebeband bestehend aus einer Folie auf Basis von Weich-Polyvinylchlorid und einer Klebemasse auf Basis einer wässrigen Dispersion von Styrol-Acrylatcoplymeren, die zum Beispiel zum Umwickeln von Lüftungsleitungen in Klimaanlagen, Drähten oder Kabeln eingesetzt wird und die insbesondere für Kabelbäume in Fahrzeugen oder Feldspulen für Bildröhren geeignet ist. Das Klebeband dient dabei zum Bündeln, Isolieren, Markieren, Abdichten oder Schützen.

Elektrische und elektromechanische Bauteile sowie die Umhüllungen von elektrischen Leitungen bestehen vielfach aus polymeren Werkstoffen, wobei Polyvinylchlorid (PVC) den wichtigsten Kunststoff darstellt, historisch bedingt aufgrund seiner Verfügbarkeit sowie seiner exzellenten Werkstoff- und Isolationseigenschaften.

Die übliche Dicke der PVC-Folien für Wickelbänder beträgt 85 bis 200 µm. Unterhalb von 85 µm treten erhebliche Probleme während der Herstellung im Kalanderprozess auf, so dass PVC-Folien für Wickelbänder mit einer Dicke unter 85 µm kaum verfügbar sind. Ebenfalls trifft dies auf Wickelbänder zu, die einen verminderten PVC-Gehalt aufweisen.

Wickelbänder auf Basis von Weich-PVC-Folien werden in Automobilen zur Bandagierung von elektrischen Leitungen zu Kabelbäumen eingesetzt. Stand in den Anfängen der technischen Entwicklung die Verbesserung der elektrischen Isolation bei Verwendung dieser ursprünglich als Isolierbänder entwickelten Wickelbänder im Vordergrund, müssen derartige Kabelsatzbänder mittlerweile weitere Funktionen erfüllen wie die Bündelung und dauerhafte Fixierung einer Vielzahl von Einzelkabeln zu einem stabilen Kabelstrang sowie den Schutz der Einzelkabel und des gesamten Kabelstrangs gegen mechanische, thermische und chemische Schäden.

Es gibt Bemühungen, statt Weich-PVC-Folie Gewebe oder Vliese zu verwenden. Die daraus resultierenden Produkte werden aber in der Praxis nur wenig eingesetzt, da sie relativ teuer sind und sich in der Handhabung (zum Beispiel Handeinreißbarkeit, elastisches Rückstellvermögen) und unter Nutzungsbedingungen (zum Beispiel Beständigkeit gegen Betriebsflüssigkeiten, elektrische Eigenschaften) stark von den gewohnten Produkten unterscheiden, wobei - wie im folgenden ausgeführt - der Dicke eine besondere Bedeutung zukommt.
Insbesondere bestehen Ummantelungen von Kupferadern überwiegend aus PVC, sofern nicht Rahmenbedingungen wie Hochtemperaturanforderungen Alternativen erzwingen.

Für den mechanischen und elektrischen Schutz derartiger Kabel sind in der Vergangenheit Selbstklebebänder entwickelt worden, wie sie allgemein für den Schutz und zur Isolierung sowie zum Bandagieren von elektrischen Leitungen und Bauteilen in erheblichem Umfang Selbstklebebänder eingesetzt werden.

Die Selbstklebebänder erlauben, einen Langzeitverbund herzustellen, ohne dass durch Wechselwirkungen zwischen Klebeband und Kabelumhüllung Schäden an dem Kabel auftreten. Denn besonders die Additive in dem weichgemachten PVC neigen zur Migration und erfordern speziell darauf aufgestimmte Klebebänder.
Daher haben sich besonders Klebebänder mit einem PVC-Folienträger durchgesetzt; zum einen wegen ihrer mechanischen Eigenschaften, zum anderen aber auch aufgrund minimierter Kompatibilitätsprobleme, da zumindest Träger und Haftgrund aus demselben Material bestehen.

Stand der Entwicklung zum Bandagieren von Leitungssätzen sind Klebebänder mit und ohne Klebstoffbeschichtung, die aus einem PVC-Trägermaterial bestehen, das durch Einarbeitung von erheblichen Mengen (30 bis 40 Gew.-%) an Weichmacher flexibel eingestellt ist. Das Trägermaterial ist zumeist einseitig mit einer Selbstklebemasse auf Basis von SBR-Kautschuk und Naturkautschuk beschichtet. In JP 10 001 583 A1, JP 05 250 947 A1, JP 2000 198 895 A1 und JP 2000 200 515 A1 werden typische Weich-PVC-Klebebänder beschrieben.

PVC, das keinen Weichmacher enthält, ist im verarbeiteten Zustand bei Raumtemperatur ein harter spröder Kunststoff. Oft benötigt man aber bei 20 °C oder darunter ein PVC-Material, das flexibel und dehnbar ist. Diese Forderung wird durch innere oder äußere Weichmacher erreicht.
Im ersteren Fall wird das monomere Vinylchlorid mit einer Komponente, die dem entstehenden Kunststoff als nachgiebige Zwischenglieder die Weichheit verleiht, copolymerisiert. Vorteil dieser inneren Weichmacher ist, dass diese "Weichmacher" nicht in die Klebemasse migrieren können beziehungsweise nicht flüchtig sind und somit keine unerwünschten Nebenreaktionen auslösen. Nachteilig ist hierbei, dass gewünschte Eigenschaften der Folien nur noch unzureichend selbst vom Folienhersteller beeinflusst werden können und der deutlich höhere Preis. Beides führt dazu, dass sich bei den Klebebandherstellern PVC-Folien ohne inneren Weichmacher durchgesetzt haben.

PVC-Folien für den Klebebandbereich werden mit Hilfe von äußeren Weichmachern hergestellt. Unter äußeren Weichmachern versteht man das Zumischen von sogenannten Weichmachern zum PVC. Hierdurch verliert das Material seine Sprödigkeit, wird weich, biegsam und dehnbar. Auch die Einfrierungstemperatur sinkt durch Zugabe von Weichmachern, das heißt, der Thermoplast geht bei tieferen Temperaturen von hartelastischen in den weichelastischen Zustand über. Man kann Weichmacher auch als Lösemittel für PVC ansehen. Die Weichmachermoleküle lagern sich zwischen die PVC Makromoleküle, so dass Ihre Beweglichkeit erhöht wird.

Der Weichmacher wird zwischen den PVC-Molekülen vorwiegend durch Dipolkräfte festgehalten. Daher kommen die meisten Weichmacher aus der Klasse der Ester organischer Säuren (zum Beispiel Phtalsäure, Adipinsäure) und werden im meistens Bereich zwischen 25 und 60 Gew.-% eingesetzt. Der bekannteste Weichmacher für PVC in der Klebebandindustrie ist das Dioctylphtalat (DOP), das sich durch seine universelle Einsetzbarkeit, hohe Flüchtigkeit und starke Migration auszeichnet. Neben den beschriebenen monomeren Weichmachern werden ebenso Weichmacher auf polymerer Basis eingesetzt. Hierbei handelt es sich meistens um Ester auf Basis von organischen Säuren und mehrwertigen, langkettigen Alkoholen. Diese polymeren Weichmacher zeichnen sich zum einen durch eine geringere Migrationsfähigkeit von der Folie in die Klebemasse und zum anderen durch eine geringeres Ausgasungsverhalten aus.

Monomere Weichmacher konventioneller Isolierbänder und Kabelwickelbänder dampfen allmählich aus, was zu einer Gesundheitsbelastung führt, insbesondere ist das üblicherweise verwendete DOP bedenklich. Weiterhin schlagen sich die Dämpfe in Kraftfahrzeugen an den Scheiben nieder, was die Sicht (und damit erheblich die Fahrsicherheit) verschlechtert und vom Fachmann als Fogging (DIN 75201) bezeichnet wird. Bei noch stärkerer Verdampfung durch höhere Temperaturen, zum Beispiel im Motorinnenraum von Fahrzeugen oder bei Isolierbändern in elektrischen Geräten, versprödet die Klebeband durch den entstehenden Weichmacherverlust.

Kommt weichgemachtes PVC mit einem anderen Kunststoff, zum Beispiel eine Klebemasse in Kontakt, so kann der Weichmacher in diesen übergehen. Das Einwandern des Weichmachers in die Klebeschicht beeinflusst die Klebemasse im allgemeinen negativ, da wichtige Klebtechnische Eigenschaften, wie die Klebkraft und Kohäsion dabei deutlich verschlechtert werden.

Die Migration von unterschiedlichen Weichmachern ist verschieden. Monomere Weichmacher zeichnen sich im wesentlichen durch eine sehr starke Migration aus während Weichmacher auf polymerer Basis eine geringere Weichmacherwanderung zeigen. Der unerwünschte Effekt der Weichmacherwanderung zeigt sich normalerweise besonders stark bei Verwendung von Klebemassen auf wässriger Basis. Hierbei nimmt bei herkömmlichen wässrigen Klebemassen, wie zum Beispiel eine Acrylatdispersionen, die Klebkraft und Kohäsion nach Lagerung deutlich ab. Diese Klebebänder sind dann nur bedingt als Klebeband einsetzbar.

Klebebänder auf Basis von Weich-PVC in Verbindung mit wässrigen Klebemassen (Acrylatdispersionen) sind zwar bekannt, jedoch kann nur ein geringer Weichmacheranteil eingesetzt werden, um die erwähnten negativen Effekte auf die klebtechnischen Eigenschaften zu vermeiden. Weiterhin erfüllen diese Klebebänder nicht spezielle Automobilspezifikationen. Die klebtechnischen Eigenschaften derartiger Klebebänder werden durch die Wanderung des Weichmachers in die Klebemasse deutlich verschlechtert. Bei höheren Konzentrationen ist das Klebeband auf Grund zu geringer Klebkraft und Kohäsion für die Verwendung ungeeignet.

Diese Weichmacher erfordern daher genau abgestimmte Klebemassesysteme. Um ein geeignetes Klebebandsystem einsetzen zu können, muss die Klebemasse die Aufnahme von Weichmachern abpuffern beziehungsweise muss die Migration der Weichmacher dazu verwendet werde, ein geeignetes klebtechnisches Profil überhaupt zu erhalten.
Der Einsatz von wässrigen Klebemassen bei höheren Weichmacherkonzentrationen beziehungsweise die Verwendung von Weichmachern zur Einstellung von Klebeigenschaften bei wässrigen Klebemassen ist nicht bekannt.

Für Einsatzbereich der Kabelwickelbänder hat sich ein Langzeittest über 3000 Stunden, beispielsweise gemäß FORD-Spezifikation S95 GG 14K 024 BA, als Standardprüfung durchgesetzt. Musterkabelsätze werden bei den Prüftemperaturen gelagert und nach festgelegten Zeiträumen, meist alle 500 Stunden, um einen Dorn mit definierten Durchmesser gebogen und anschließend auf Schädigungen untersucht; dieser Test läuft über eine Gesamtdauer von 3000 Stunden. Neben rein visueller Begutachtung findet teilweise zusätzlich eine elektrische Isolationsprüfung statt. Die Prüftemperaturen richten sich nach den Einsatzbereichen der Kabelsätze und betragen zum Beispiel 90 °C für Gewebebänder mit Einsatz im Passagierraum nach FORD S95 GG 14K 024 BA. Für Anwendungen im Motorraum werden auch Dauertemperaturen von 125 °C und höher gefordert.

Wässrige Systeme auf Basis von Styrol-Acrylat-Copolymeren sind bekannt und werden auf Grund Ihrer Widerstandsfähigkeit gegenüber Wasser, mechanischem Abrieb, Flexibilität für den Baubereich, zum Beispiel für Fußbodenbelege und Dichtungen eingesetzt. Im Klebebandbereich sind diese Materialen als Ausgangsstoffe für Klebemasse nicht bekannt. Je nach Styrolanteil der Copolymere zeichnen sich die Materialien durch eine unterschiedliche Härte aus, wobei normalerweise ein Styrolanteil zwischen 30 und 60 % eingesetzt wird. Schichten aus Styrol-Acrylat-Copolymeren, ausgestrichen auf harten, weichmacherfreien Untergründen, zeigen keinerlei selbstklebenden Eigenschaften, wie Klebkraft oder Tack.

Aufgabe der vorliegenden Erfindung ist es, ein Klebeband mit einer Folie auf Basis von Weich-PVC, die entweder polymere und/oder monomere Weichmacher enthält, und mit einer lösemittelfrei hergestellten, wässrigen Klebemasse auf Basis von Acrylat-Styrol-Copolymeren zu schaffen, wobei die Klebeigenschaften mittels Weichmacherwanderung von der Folie in die Klebemasse eingestellt werden können und sich daher die lösemittelfreie, wässrige Klebemasse für Folien mit hohen Weichmacherkonzentrationen eignet.
Weiterhin sollen die Klebebänder die neue Fordspezifikation FORD S95 GG 14K 024 BA erfüllen und als Klebeband zum Beispiel zum Umwickeln von Lüftungsleitungen in Klimaanlagen, Drähten oder Kabeln eingesetzt werden und insbesondere für Kabelbäume in Fahrzeugen oder Feldspulen für Bildröhren geeignet sein.

Gelöst wird diese Aufgabe durch ein Klebeband, wie es im Hauptanspruch dargelegt ist. Gegenstand der Unteransprüche sind vorteilhafte Fortbildungen des Erfindungsgegenstands. Des weiteren umfasst die Erfindung Verwendungsvorschläge der erfindungsgemäßen Klebebänder.

Demgemäss betrifft die Erfindung eine einseitig selbstklebend ausgerüstetes Klebeband, mit einer Folie auf Basis von Weich-PVC und einer Klebemasse auf Basis einer wässrigen Dispersion von Styrol-Acrylatsäurederivat-Copolymeren, enthaltend Weichmacher, die aus der Folie in die Klebemasse gewandert sind.
Durch die Wanderung der Weichmacher aus der Folie in die Klebemasse werden in der Klebemasse selbstklebende Eigenschaften erreicht und eingestellt werden.

Erfindungsgemäß als Folien einsetzen lassen sich vorteilhaft Weich-PVC-Folien mit polymeren Weichmachern, wie zum Beispiel Ester aus Phthalsäure, Adipinsäure oder Phosphorsäure und mehrwertigen Alkoholen sowie monomere Weichmacher, wie zum Beispiel DOP, TOTM oder DIDP.

Die erfindungsgemäßen Folien werden in einer bevorzugten Ausführungsform der Erfindung mittels eines Kalander-Prozesses hergestellt.

Die Dicken der Weich-PVC-Folien liegen bevorzugt zwischen 50 und 200 µm, insbesondere zwischen 70 und 180 µm.

In einer bevorzugten Ausführungsform der Erfindung ist zwischen der Folie auf Basis von Weich-PVC und der Klebeschicht ein Haftvermittler vorhanden, der in der Lage ist, den guten Verbund der Klebemasse mit der Folie stark zu verbessern.

Weiterhin vorteilhaft ist eine Rückseitenlackierung auf der der Klebemassenseite abgewandten Folienseite vorhanden, die leichtes Abrollen gewährleistet.

Der Schichtauftrag der Klebeschicht beträgt insbesondere 10 bis 50 g/m². In einer bevorzugten Variante wird ein Schichtauftrag von 13 bis 40 g/m², besonders bevorzugt 15 bis 35 g/m², eingestellt.

Für den Fachmann überraschend ist, dass diese Folien auch bei Verwendung von hohen Weichmacherkonzentrationen von bis zu 40 Gew.-% in Verbindung mit den beschriebenen, wässrigen Klebemassen eingesetzt werden können. Normalerweise würde der Fachmann erwarten, dass sich durch Migration des Weichmachers in die Klebemasse eine deutliche Verschlechterung der klebtechnischen Eigenschaften der Klebemasse ergibt.

Bei den erfindungsgemäßen Klebebänder hingegen wird die Dispersion auf Basis von Acrylsäurederivat-Styrol-Copolymeren verwendet, die durch Migration des oder der Weichmacher von der Weich-PVC-Folie in die Klebemasse selbstklebend wird. Je nach Weichmacherkonzentration und Temperaturbehandlung der Klebebänder können die Klebeeigenschaften eingestellt werden.

Erfindungsgemäß ist hierbei die Verwendung von Acrylsäurederivat-Styrol-Copolymeren mit einem Styrolanteil von 10 bis 70 %. In einer besonders bevorzugten Variante werden Acrylsäurederivat-Styrol-Copolymere verwendet mit einem Styrolanteil von 20 bis 65 %.

Erfindungsgemäß ist auch die Verwendung von Abmischungen von Acrylatsäurederivat-Styrol-Copolymeren mit mindestens einer Harzdispersionen auf Basis von Kohlenwasserstoffharzen, Kolophoniumharzen (Rosin ester) oder Terpenphenolharzen. Die Anteil der Harzdispersion kann bis zu 50 Gew.-% betragen.

In einer zweiten bevorzugten Ausführungsform können Acrylatdispersionen sowie Styrol-Butadien-Copolymerdispersionen eingemischt werden. Der Anteil der Harzdispersionen beziehungsweise der Acrylatdispersionen kann hierbei bis zu 60 Gew.-% betragen.

Ebenfalls erfindungsgemäß ist auch die Verwendung von Abmischungen von Acrylsäurederivat-Styrol-Copolymeren mit Ölen, Ölemulsionen beziehungsweise mit polymeren oder monomeren Weichmachern um Feinabstimmungen der Klebemasse vorzunehmen. Der Anteil der Öl- beziehungsweise Weichmacherkomponente kann hierbei bis zu 40 Gew.-% betragen.

Die Klebemasse ist vorzugsweise durch chemische, thermische oder strahlenchemische Behandlung vernetzt.

Der Klebemasse können die dem Fachmann geläufigen Antischaummittel, Alterungsschutzmittel und Netzmittel zugemischt werden, um die Eigenschaften derselben zu optimieren.

Die Herstellung der erfindungsgemäßen Klebebänder kann nach den bekannten Verfahren erfolgen. Eine Übersicht über übliche Herstellungsverfahren findet sich beispielsweise in "Coating Equipment", Donatas Satas in "Handbook of Pressure Sensitive Adhesive Technology", Second Edition edited by Donatas Satas, Van Nostrand New York, pp. 708 bis 808. Die bekannten Verfahren zum Trocknen und Schneiden der Klebebänder sind ebenfalls im Handbook zu finden.

Die erfindungsgemäßen Klebebänder sind für eine große Anzahl von Wickelanwendungen geeignet.
So sind die erfindungsgemäßen Wickelfolien zum Beispiel zum Umwickeln von Lüftungsleitungen in Klimaanlagen, Drähten oder Kabeln eingesetzt wird und die insbesondere für Kabelbäume in Fahrzeugen oder Feldspulen für Bildröhren geeignet ist. Die Klebeband dient dabei zum Bündeln, Isolieren, Markieren, Abdichten oder Schuetzen.

## Patentansprüche

1. Verwendung eines Klebebands zum Ummanteln von Kabelsätzen in Fahrzeugen oder Feldspulen für Bildröhren, wobei das Klebeband besteht aus
einer Folie auf Basis von Weich-Polyvinylchlorid und
einer wässrigen Klebemassendispersion auf Basis von Styrol-Acrylatsäurederivat-Copolymeren,
enthaltend Weichmacher, die aus der Folie in die Klebemasse gewandert sind, wobei der Styrolanteil in den Styrol-Acrylatsäurederivat-Copolymeren 10 bis 70 % beträgt.

2. Verwendung nach Anspruch 1, **dadurch gekennzeichnet, dass** der Styrolanteil in den Styrol-Acrylatsäurederivat-Copolymeren 20 bis 65 % beträgt.

3. Verwendung nach den Ansprüchen 1 oder 2, **dadurch gekennzeichnet, dass** der Schichtauftrag der Klebemasse 10 bis 50 g/m² beträgt.

4. Verwendung nach zumindest einem der Ansprüche 1 bis 3, **dadurch gekennzeichnet, dass** die Folie eine Foliendicke zwischen 50 und 200 µm aufweist.

5. Verwendung nach zumindest einem der Ansprüche 1 bis 4, **dadurch gekennzeichnet, dass** die Klebeschicht bis zu 50 Gew.-% bezogen auf die gesamte Klebemasse mindestens eine Harzdispersion auf Basis von Kohlenwasserstoffharzen, Rosinestern oder Terpenphenolharzen enthält.

6. Verwendung nach zumindest einem der vorherigen Ansprüche, **dadurch gekennzeichnet, dass** die Klebeschicht bis zu 60 Gew.-% bezogen auf die gesamte Klebemasse mindestens eine Dispersion auf Basis von Styrol-Butadien-Copolymeren oder Acrylatdispersionen enthält.

7. Verwendung nach zumindest einem der vorherigen Ansprüche, **dadurch gekennzeichnet, dass** die Klebeschicht bis zu 40 Gew.% bezogen auf die gesamte Klebemasse mindestens einen monomeren oder polymeren Weichmacher oder Öl enthält.

8. Verwendung nach zumindest einem der vorherigen Ansprüche, **dadurch gekennzeichnet, dass** zwischen der Folie und der Klebeschicht eine Schicht aus einem Primer aufgebracht ist.

9. Verwendung nach zumindest einem der vorherigen Ansprüche, **dadurch gekennzeichnet, dass** auf der der Klebemassenseite abgewandten Folienseite eine Releaseschicht aufgebracht ist.

10. Verwendung nach zumindest einem der vorherigen Ansprüche, **dadurch gekennzeichnet, dass** die Klebemasse durch chemische, thermische oder strahlenchemische Behandlung vernetzt ist.

11. Verwendung nach zumindest einem der vorherigen Ansprüche, **dadurch gekennzeichnet, dass** die Klebemasse Antischaummittel, Alterungsschutzmittel und Netzmittel enthält.

## Claims

1. Use of an adhesive tape for sheathing cable looms in vehicles or field coils for picture tubes, the adhesive tape being composed of
a sheet based on plasticized polyvinyl chloride and
an aqueous adhesive dispersion based on styrene-acrylic acid derivative copolymers, comprising plasticizers which have migrated from the sheet into the adhesive, the styrene fraction of the styrene-acrylic acid derivative copolymers being from 10% to 70%.

2. Use according to Claim 1, **characterized in that** the styrene fraction of the styrene-acrylic acid derivative copolymers is from 20% to 65%.

3. Use according to Claim 1 or 2, **characterized in that** the application rate of the adhesive is from 10 to 50 g/m².

4. Use according to at least one of Claims 1 to 3, **characterized in that** the sheet has a thickness of between 50 and 200 µm.

5. Use according to at least one of Claims 1 to 4, **characterized in that** the adhesive layer contains up to 50% by weight based on the overall adhesive of at least one resin dispersion based on hydrocarbon resins, rosin esters or terpene-phenolic resins.

6. Use according to at least one of the preceding claims, **characterized in that** the adhesive layer contains up to 60% by weight based on the overall adhesive of at least one dispersion based on styrene-butadiene copolymers or acrylate dispersions.

7. Use according to at least one of the preceding claims, **characterized in that** the adhesive layer contains up to 40% by weight based on the overall adhesive of at least one monomeric or polymeric plasticizer or oil.

8. Use according to at least one of the preceding claims, **characterized in that** a layer of a primer has been applied between the sheet and the adhesive layer.

9. Use according to at least one of the preceding claims, **characterized in that** a release layer has been applied on the side of the sheet remote from the adhesive side.

10. Use according to at least one of the preceding claims, **characterized in that** the adhesive has been crosslinked by chemical, thermal or radiation treatment.

11. Use according to at least one of the preceding claims, **characterized in that** the adhesive comprises antifoams, ageing inhibitors and wetting agents.

## Revendications

1. Utilisation d'une bande adhésive pour envelopper des ensembles de câbles dans des véhicules ou des stators inductifs pour tubes cathodiques, la bande adhésive étant constituée par
- une feuille à base de poly(chlorure de vinyle) souple et
- une dispersion aqueuse de masse adhésive à base de copolymères de styrène-dérivé d'acide acrylique,
contenant des plastifiants qui se sont déplacés de la feuille dans la masse adhésive, la proportion de styrène dans les copolymères de styrène-dérivé d'acide acrylique étant de 10 à 70%.

2. Utilisation selon la revendication 1, **caractérisée en ce que** la proportion de styrène dans les copolymères de styrène-dérivé d'acide acrylique est de 20 à 65%.

3. Utilisation selon les revendications 1 ou 2, **caractérisée en ce que** la quantité appliquée en couche de masse adhésive est de 10 à 50 g/m².

4. Utilisation selon au moins l'une quelconque des revendications 1 à 3, **caractérisée en ce que** la feuille présente une épaisseur entre 50 et 200 µm.

5. Utilisation selon au moins l'une quelconque des revendications 1 à 4, **caractérisée en ce que** la couche adhésive contient jusqu'à 50% en poids, par rapport à la masse adhésive totale, d'au moins une dispersion de résine à base de résines hydrocarbonées, d'esters de colophane ou de résines de terpènephénol.

6. Utilisation selon au moins l'une quelconque des revendications précédentes, **caractérisée en ce que** la couche adhésive contient jusqu'à 60% en poids, par rapport à la masse adhésive totale, d'au moins une dispersion à base de copolymères de styrène-butadiène ou de dispersions d'acrylate.

7. Utilisation selon au moins l'une quelconque des revendications précédentes, **caractérisée en ce que** la couche adhésive contient jusqu'à 40% en poids, par rapport à la masse adhésive totale, d'au moins un plastifiant monomère ou polymère ou une huile.

8. Utilisation selon au moins l'une quelconque des revendications précédentes, **caractérisée en ce qu'**une couche d'un apprêt est appliquée entre la feuille et la couche adhésive.

9. Utilisation selon au moins l'une quelconque des revendications précédentes, **caractérisée en ce qu'**une couche antiadhésive est appliquée sur la face de la feuille dos à la face de la masse adhésive.

10. Utilisation selon au moins l'une quelconque des revendications précédentes, **caractérisée en ce que** la masse adhésive est réticulée par un traitement chimique, thermique ou chimique avec des rayons.

11. Utilisation selon au moins l'une quelconque des revendications précédentes, **caractérisée en ce que** la masse adhésive contient des antimousses, des agents de protection contre le vieillissement et des mouillants.
